# EUROPEAN PATENT APPLICATION

(11) **EP 2 386 744 A1**
(43) Date of publication of application: **16.11.2011**
(21) Application number: 09837497.8
(22) Date of filing: 09.01.2009
(51) Int. Cl.: F02D 45/00, B60K 6/445, B60W 10/06, B60W 20/00

(54) **CONTROL DEVICE FOR VEHICLE**

(71) Applicant: Toyota Jidosha Kabushiki Kaisha, Toyota-shi, Aichi 471-8571 (JP)
(72) Inventor: TERAYA, Ryuta, Toyota-shi Aichi 471-8571 (JP)
(74) Representative: Intès, Didier Gérard André
(86) International application number: PCT/JP2009/050215
(87) International publication number: WO 2010/079609

(57) **Abstract**

When there is a request to set the output of an engine to correspond to the load of the engine during catalyst warm-up control by which the engine ignition timing is retarded, ECU sets the engine operation line as an emission line to control the engine using the set emission line. The emission line corresponds to a line for controlling the engine to be operated at a relatively high revolution speed and at a relatively low torque as compared with the case of the normal line that is set at the time when catalyst warm-up control is not being performed. The emission line is obtained in advance by experiments and the like in consideration of the amount of retarding the ignition timing during catalyst warm-up control, and the like.

## Description

### TECHNICAL FIELD

The present invention relates to a technique for controlling a vehicle including at least an internal combustion engine as a driving force source, and particularly to a technique for suppressing degradation of the emission characteristics in exhaust gas in the internal combustion engine.

### BACKGROUND ART

A hybrid vehicle using at least one of an engine and a motor as a driving force source has been put into practical use. Such a hybrid vehicle can run only by the motor. Accordingly, when the output of the engine is not required, the engine is temporarily stopped even during vehicle running. Then, when the output of the engine is required, the engine is started. Thus, the fuel consumption in the engine and the engine displacement are decreased by repeatedly stopping and starting the engine, which allows improvement in fuel efficiency and atmosphere environment preservation.

Furthermore, the vehicle including an engine as one of the driving force sources is provided with a catalyst (catalytic converter) that purifies the exhaust gas from the engine. Since a catalyst has the property that the purifying performance is decreased in proportion to a decrease in its temperature, there may be a case where the control is performed for warming up the catalyst at an early stage at the startup of the engine (catalyst warm-up control). In this catalyst warm-up control, the engine ignition timing is generally more retarded than usual. For example, Japanese Patent Laying-Open No. 2006-258020 (Patent Document 1) discloses the technique for suppressing deterioration of the operating conditions of the auxiliary machines (a compressor of an air conditioner, an alternator, a mechanical oil pump and the like which are operated by the power of the engine) that are caused by a decrease in the engine torque resulting from this retardation of the ignition timing.

The control device for an engine disclosed in Japanese Patent Laying-Open No. 2006-258020 detects the load of the engine (the operating amount of the auxiliary machine of the engine) when warm-up of the catalyst is required. If the load of the engine is greater than the predetermined amount, restricted catalyst warm-up control is performed in which the engine torque-down is relatively suppressed as compared with the case of quick catalyst warm-up control. Accordingly, it becomes possible to prevent deterioration of the operating conditions of the auxiliary machines resulting from the retardation of the ignition timing during catalyst warm-up control.
Patent Document 1: Japanese Patent Laying-Open No. 2006-258020
Patent Document 2: Japanese Patent Laying-Open No. 2003-214308

### DISCLOSURE OF THE INVENTION

### PROBLEMS TO BE SOLVED BY THE INVENTION

Since the purifying performance of the catalyst is not sufficiently achieved during the above-described catalyst warm-up control, it is essential to suppress generation of the emissions. However, in the case where the engine torque down is suppressed during catalyst warm-up control in accordance with the load of the engine as disclosed in Japanese Patent Laying-Open No. 2006-258020, it is also conceivable that the emissions may increase.

The present invention has been made to solve the above-described problems. An object of the present invention is to provide a control device capable of suppressing discharge of emissions during catalyst warm-up control.

### MEANS FOR SOLVING THE PROBLEMS

A control device according to the present invention controls a vehicle including an internal combustion engine as a driving force source and having a catalyst purifying exhaust. Warm-up control is performed on this vehicle for retarding a fuel ignition timing in the internal combustion engine to promote a warm-up of the catalyst when a prescribed condition is satisfied. The control device includes a first determination unit determining whether warm-up control is being performed; a second determination unit determining whether a load required for the internal combustion engine is greater than a prescribed value; and a control unit controlling the internal combustion engine. When warm-up control is being performed and the required load is greater than the prescribed value, the control unit controls a revolution speed of the internal combustion engine to be higher than a speed at a time when warm-up control is not being performed.

Preferably, when warm-up control is not being performed, the control unit controls the revolution speed of the internal combustion engine to correspond to the required load. When warm-up control is being performed and the required load is greater than the prescribed value, the control unit controls the revolution speed of the internal combustion engine to correspond to the required load and to be higher than the speed at the time when warm-up control is not being performed.

Further preferably, when warm-up control is not being performed, the control unit controls the revolution speed and an output torque of the internal combustion engine to correspond to the required load. When warm-up control is being performed and the required load is greater than the prescribed value, the control unit controls the revolution speed of the internal combustion engine to correspond to the required load and to be higher than the speed at the time when warm-up control is not being performed, and also controls the output torque of the internal combustion engine to correspond to the required load and to be lower than a torque at the time when warm-up control is not being performed.

Further preferably, the control device further includes a storage unit storing a normal line and an emission line each as an operation line for controlling the revolution speed and the output torque of the internal combustion engine to correspond to the required load, said emission line controlling the revolution speed of the internal combustion engine to be relatively high and the output torque of the internal combustion engine to be relatively low as compared with a case where the normal line is used to output identical power from the internal combustion engine. The control unit controls the internal combustion engine based on the normal line when warm-up control is not being performed, and controls the internal combustion engine based on the emission line when warm-up control is being performed and the required load is greater than the prescribed value.

Further preferably, the control unit controls the revolution speed of the internal combustion engine to be set at a constant speed irrespective of the required load when warm-up control is being performed and the required load is less than the prescribed value.

Further preferably, the vehicle includes a rotating electric machine as a driving force source in addition to the internal combustion engine, and is capable of running with electric power supplied from outside of the vehicle.

A control device according to another aspect of the present invention controls a vehicle including an internal combustion engine as a driving force source and having a catalyst purifying exhaust. Warm-up control is performed on this vehicle for retarding a fuel ignition timing in the internal combustion engine to promote a warm-up of the catalyst when a prescribed condition is satisfied. The control device includes a first determination unit determining whether warm-up control is being performed; a second determination unit determining whether a load required for the internal combustion engine is greater than a prescribed value; a storage unit storing a normal line as an operation line for controlling a revolution speed and an output torque of the internal combustion engine to correspond to the required load and an emission line for controlling the revolution speed of the internal combustion engine to be relatively high and the output torque of the internal combustion engine to be relatively low as compared with a case where identical power is output from the internal combustion engine based on the normal line; and a control unit controlling the internal combustion engine. The control unit controls the revolution speed and the output torque of the internal combustion engine to correspond to the required load based on the normal line when warm-up control is not being performed. The control unit controls the revolution speed and the output torque of the internal combustion engine to correspond to the required load based on the emission line when warm-up control is being performed and the required load is greater than the prescribed value. The control unit controls the revolution speed of the internal combustion engine to be set at a constant speed irrespective of the required load when warm-up control is being performed and the required load is less than the prescribed value.

A controlling method according to another aspect of the present invention is performed by a control device for a vehicle including an internal combustion engine as a driving force source and having a catalyst purifying exhaust. Warm-up control is performed on this vehicle for retarding a fuel ignition timing in the internal combustion engine to promote a warm-up of the catalyst when a prescribed condition is satisfied. The controlling method includes the steps of: determining whether warm-up control is being performed; determining whether a load required for the internal combustion engine is greater than a prescribed value; and controlling the internal combustion engine. The step of controlling the internal combustion engine includes the step of, when warm-up control is being performed and the required load is greater than the prescribed value, controlling a revolution speed of the internal combustion engine to be higher than a speed at a time when warm-up control is not being performed.

### EFFECTS OF THE INVENTION

The present invention allows suppression of emission discharge during catalyst warm-up control.

### BRIEF DESCRIPTION OF THE DRAWINGS

Fig. 1 is a diagram showing the structure of a vehicle according to the embodiment of the present invention.
Fig. 2 is a diagram showing the structure of an engine mounted in the vehicle according to the embodiment of the present invention.
Fig. 3 is a diagram (first) showing the process flow performed by an ECU.
Fig. 4 is a diagram showing a map of an engine operation line.
Fig. 5 is a functional block diagram of the ECU.
Fig. 6 is a diagram (second) showing the process flow performed by the ECU.

### DESCRIPTION OF THE REFERENCE SIGNS

10 vehicle, 11 charging device, 12 driving wheel, 13 connector, 14 reduction gear, 15 paddle, 19 alternating-current (AC) power supply, 100 engine, 102 combustion chamber, 104 injector, 106 ignition coil, 108 engine water temperature sensor, 110 intake pipe, 112 throttle motor, 114 throttle valve, 116 airflow meter, 118 intake air temperature sensor, 120 exhaust pipe, 122 air-fuel ratio sensor, 124 oxygen sensor, 140 catalyst, 200 power split device, 212 output shaft, 310 driving battery, 320 boost converter, 330 inverter, 340 monitoring unit, 400 ECU, 402 MG_ECU, 404 HV_ECU 406 engine ECU, 410 input interface, 420 processing unit, 421 determination unit, 422 determination unit, 423 setting unit, 424 control unit, 430 storage unit, 440 output interface.

### BEST MODES FOR CARRYING OUT THE INVENTION

The embodiments of the present invention will be hereinafter described with reference to the drawings, in which the same components are designated by the same reference characters, and have the same names and functions. Therefore, detailed description thereof will not be repeated.

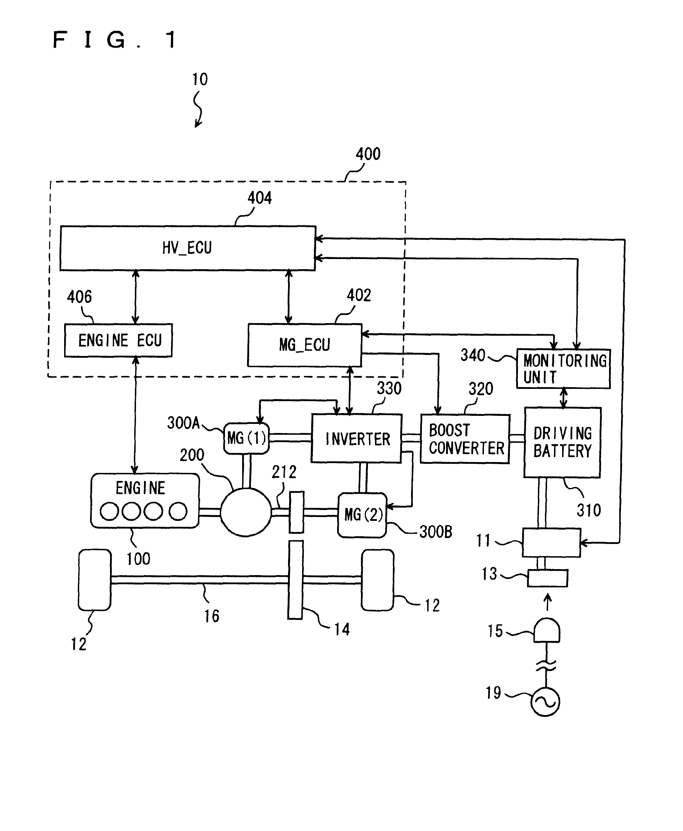

Fig. 1 is a diagram showing the structure of a vehicle 10 on which a control device according to the embodiment of the present invention is mounted. While vehicle 10 corresponds to a vehicle that runs with power from at least one of an engine 100 and a second motor generator (MG(2)) 300B (hereinafter also referred to as a "hybrid vehicle"), and also corresponds to a vehicle that can run with electric power supplied from an alternating-current (AC) power supply 19 of the electric power company provided external to the vehicle (hereinafter also referred to as a "plug-in vehicle"). In addition, the vehicle to which the control device according to the present invention is applicable is not limited to a hybrid vehicle and a plug-in vehicle as long as the vehicle has a configuration that allows the engine revolution speed (revolution number) to be controlled at a desired revolution speed. For example, the control device according to the present invention can also be applied to an engine vehicle provided with an automatic continuously variable transmission.

In addition to engine 100 and MG(2) 300B as described above, vehicle 10 includes a power split device 200 distributing the power generated by engine 100 into an output shaft 212 and a first motor generator (MG(1)) 300A; a reduction gear 14 transmitting the power generated by engine 100, MG(1) 300A and MG(2) 300B to a driving wheel 12 and transmitting the drive power of driving wheel 12 to engine 100, MG(1) 300A and MG(2) 300B; a driving battery 310 storing electric power for driving MG(1) 300A and MG(2) 300B; an inverter 330 performing current control while converting a direct current of driving battery 310 and an alternating current of each of MG(1) 300A and MG(2) 300B; a boost converter 320 performing voltage conversion between driving battery 310 and inverter 330; an engine ECU 406 controlling the operating state of engine 100; an MG_ECU 402 controlling the charging and discharging states and the like of each of MG(1) 300A, MG(2) 300B, inverter 330, and driving battery 310 depending on the state of vehicle 10; and an HV_ECU 404 mutually managing and controlling engine ECU 406, MG_ECU 402 and the like to control the entire hybrid system so as to allow vehicle 10 to be most efficiently operated.

Power split device 200 is formed of a planetary gear including a sun gear, a pinion gear, a carrier, and a ring gear. Engine 100, MG(1) 300A and MG(2) 300B are coupled via power split device 200 to establish the relationship among the engine revolution speeds of engine 100, MG(1) 300A and MG(2) 300B such that determination of any two of the revolution speeds leads to determination of the remaining revolution speed. When this relationship is used, a revolution speed (revolution number) Ne of engine 100 can be controlled at a desired revolution speed by controlling the revolution speed of MG(1) 300A, for example, even if the revolution speed of MG(2) 300B remains the same.

Furthermore, vehicle 10 includes a connector 13 for connecting a paddle 15 connected to AC power supply 19 of an electric power company and a charging device 11 converting, into a direct current, the electric power supplied from AC power supply 19 via connector 13 to output the power to driving battery 310. In response to the control signal from HV_ECU 404, charging device 11 controls the amount of the electric power that is to be output to driving battery 310.

In Fig. 1, although each ECU is differently configured, the ECU may be configured as an ECU having two or more ECUs integrated with each other. For example, as shown by a dotted line in Fig. 1, MG_ECU 402, HV_ECU 404 and engine ECU 406 are integrated to form an ECU 400. In the following description, MG_ECU 402, HV_ECU 404 and engine ECU 406 each are described as ECU 400 without distinguishing one from the other.

ECU 400 receives the signals from a vehicle speed sensor, an accelerator pedal position sensor, a throttle opening position sensor, an MG(1) revolution speed sensor, an MG(2) revolution speed sensor, an engine revolution speed sensor (which are not shown), and a monitoring unit 340 monitoring the state of driving battery 310 (a battery voltage value VB, a battery current value IB, a battery temperature TB, and the like).

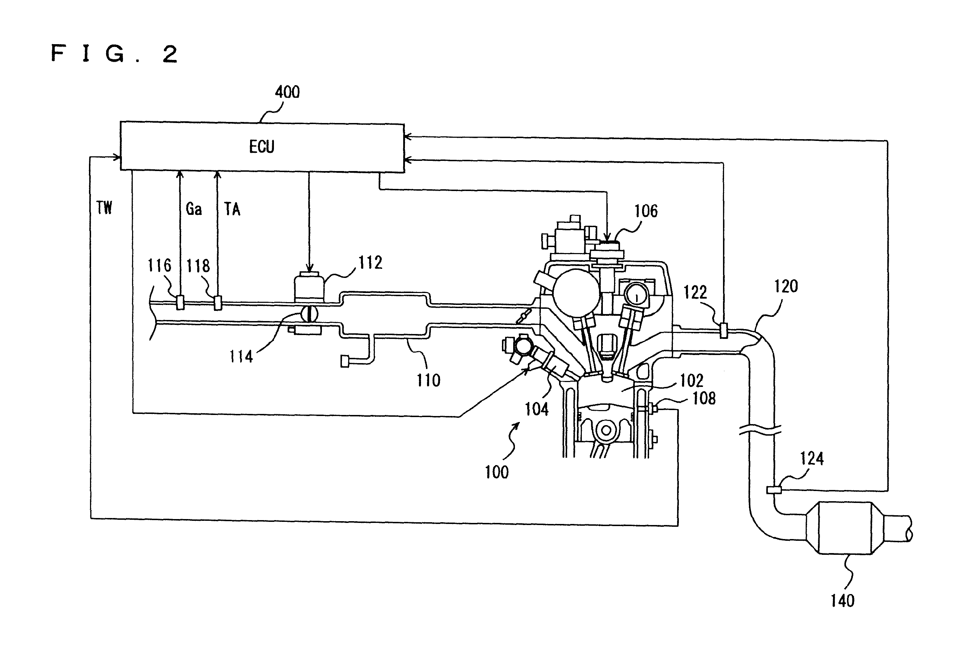

Referring to Fig. 2, engine 100 and peripheral devices related to engine 100 will then be described. In this engine 100, the air taken in through an air cleaner (not shown) circulates through an intake pipe 110 and is introduced into a combustion chamber 102 of engine 100. The quantity of the air introduced into combustion chamber 102 is adjusted by the actuating amount of a throttle valve 114 (throttle opening position). The throttle opening position is controlled by a throttle motor 112 which is operated based on the signal from ECU 400.

The fuel is stored in a fuel tank (not shown) and injected from an injector 104 by the fuel pump (not shown) into combustion chamber 102. The air-fuel mixture of the air introduced from intake pipe 110 and the fuel injected from injector 104 is ignited and burned using an ignition coil 106 controlled by the control signal from ECU 400.

The exhaust gas obtained after combustion of the air-fuel mixture is discharged to the atmosphere through a catalyst 140 provided in the middle of an exhaust pipe 120.

Catalyst 140 is a three-way catalyst that serves to purify the emissions (harmful substances such as hydrocarbon (HC), carbon monoxide (CO) and nitrogen oxide (NOx)) contained in the exhaust gas. Catalyst 140 carries noble metals obtained by using alumina as a base material and having platinum, palladium and rhodium added thereto, which allows simultaneous occurrence of the oxidation reaction of hydrocarbon and carbon monoxide and the reduction reaction of nitrogen oxide. Catalyst 140 has the property that the exhaust purifying performance is degraded in accordance with a decrease in its temperature.

ECU 400 receives the signals from an engine water temperature sensor 108, an airflow meter 116, an intake air temperature sensor 118, an air-fuel ratio sensor 122, and an oxygen sensor 124. Engine water temperature sensor 108 detects a temperature of the engine cooling water (engine water temperature) TW. Airflow meter 116 detects an intake air quantity (the air quantity taken into engine 100 per unit time) Ga. Intake air temperature sensor 118 detects a temperature of the intake air (intake air temperature) TA. Air-fuel ratio sensor 122 detects the ratio between the air and the fuel in the exhaust gas. Oxygen sensor 124 detects the oxygen concentration in the exhaust gas. Each of these sensors transmits the signal showing the detection results to ECU 400.

Based on the signal sent from each sensor, and the map and program stored in the ROM (Read Only Memory), ECU 400 controls ignition coil 106 such that an appropriate ignition timing is set, controls throttle motor 112 such that an appropriate throttle opening position is set, and controls injector 104 such that an appropriate fuel injection amount is set.

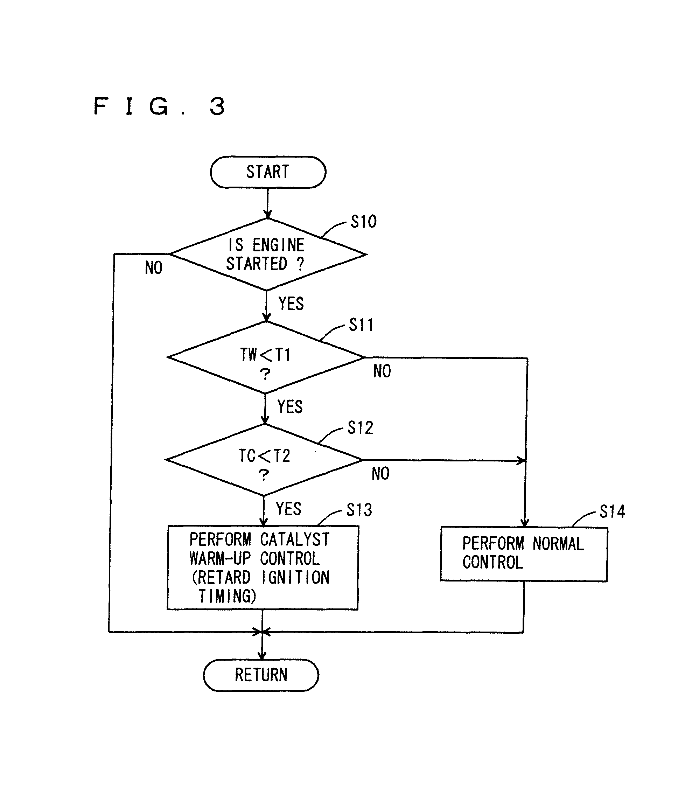

Referring to Fig. 3, the catalyst warm-up control performed by ECU 400 will then be described. As shown in Fig. 3, engine 100 is started (YES in step (hereinafter abbreviated as S) 10). When engine water temperature TW is higher than a prescribed threshold value T1 (NO in S11) or when a catalyst temperature TC is higher than a prescribed threshold value T2 (NO in S12), ECU 400 performs normal control (S14). In contrast, when engine water temperature TW is lower than T1 (YES in S11) and catalyst temperature TC is lower than a threshold value T2 (YES in S12), ECU 400 performs catalyst warm-up control (S13). It is to be noted that catalyst temperature TC is a value estimated by ECU 400 based on the parameters such as engine water temperature TW closely related to the temperature of catalyst 140, the integrated value of intake air quantity Ga, and engine revolution speed Ne.

When ECU 400 performs the above-described catalyst warm-up control in S13, ECU 400 retards the ignition timing of engine 100 as compared with the case of the above-described normal control in S14. Catalyst 140 is warmed up at an early stage by this retardation of the ignition timing.

Then, the drive control of engine 100 performed by ECU 400 will be described.

ECU 400 first sets vehicle requiring power P that is to be output from vehicle 10 based on the accelerator pedal position and the vehicle speed. Then, based on this vehicle requiring power P, ECU 400 sets battery requiring power Pb that is to be output from driving battery 310 and engine requiring power Pe that is to be output from engine 100. ECU 400 then sets a target engine revolution speed Netgt and a target engine torque Tetgt based on engine requiring power Pe, to control fuel injection and ignition in engine 100 and also control the revolution speed of MG(1) 300A and the like such that engine 100 is operated in accordance with the operation line shown by target engine revolution speed Netgt and target engine torque Tetgt which are set. Consequently, the driving force in accordance with vehicle requiring power P can be implemented to satisfy the request from the driver.

In this case, ECU 400 distributes vehicle requiring power P only to battery requiring power Pb and stops engine 100 until vehicle requiring power P exceeds the power that can be output by driving battery 310. In the case where vehicle requiring power P exceeds the power that can be output by driving battery 310, ECU 400 distributes vehicle requiring power P also to engine requiring power Pe at a prescribed ratio and starts engine 100. Thus, in consideration of the fact that vehicle 10 is a plug-in hybrid vehicle, ECU 400 expands the area in which vehicle 10 runs only with the electric power of driving battery 310 (the area in which engine 100 is stopped) for the purpose of achieving improvement in fuel efficiency. Due to this effect, vehicle 10 shows a tendency that the temperature of catalyst 140 is relatively low and the load of engine 100 is relatively high at the startup of engine 100 as compared with the case of a normal hybrid vehicle. Therefore, for vehicle 10, there is an increased need to set the output torque of engine 100 to correspond to vehicle requiring power P while performing catalyst warm-up control (retardation of the ignition timing).

In the present embodiment, in order to allow reduction of the emissions and a response to the driver's request during catalyst warm-up control, an emission line used during catalyst warm-up control is additionally provided as an engine operation line for setting target engine revolution speed Netgt and target engine torque Tetgt, aside from the normal line used during normal control.

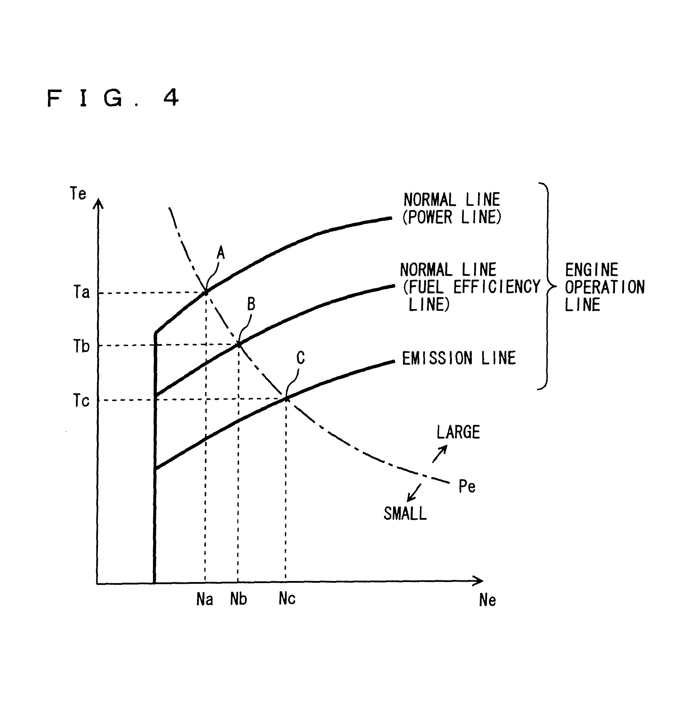

Fig. 4 is a diagram showing the map of an engine operation line used in the present embodiment. As shown in Fig. 4, the engine operation line is set using an engine revolution speed Ne and an engine torque Te each as a parameter.

In the present embodiment, the normal line is first set as one of the engine operation lines. This normal line includes a fuel efficiency line with emphasis on fuel efficiency and a power line with emphasis on power.

Furthermore, in the present embodiment, the emission line is set aside from the above-described normal line. The present invention is **characterized in that** this emission line is used during catalyst warm-up control.

This emission line serves as an engine operation line for setting target engine revolution speed Netgt at an optimal value for suppressing emission discharge while setting target engine torque Tetgt at the value in accordance with engine requiring power Pe during catalyst warm-up control. The emission line is obtained by experiments and the like in consideration of the amount of retarding the ignition timing during catalyst warm-up control.

On the map in Fig. 4, ECU 400 sets target engine revolution speed Netgt and target engine torque Tetgt based on one of intersections A, B and C of the engine operation line and the curve in which engine requiring power Pe (= Netgt x Tetgt) is set constant. As seen from Fig. 4, in the case where engine requiring power Pe remains the same, target engine revolution speed Netgt set in accordance with the emission line (Nc in Fig. 4) is higher than target engine revolution speed Netgt set in accordance with the normal line (Na or Nb in Fig. 4), and target engine torque Tetgt set in accordance with the emission line (Tc in Fig. 4) is lower than target engine torque Tetgt set in accordance with the normal line (Ta or Tb in Fig. 4). In other words, when the engine operation line is set as an emission line, engine 100 is controlled to be set at a relatively high revolution speed and at a relatively low torque as compared with the case were the engine operation line is set as a normal line. It is to be noted that the emission line shown in Fig. 4 is merely by way of example and not limited thereto.

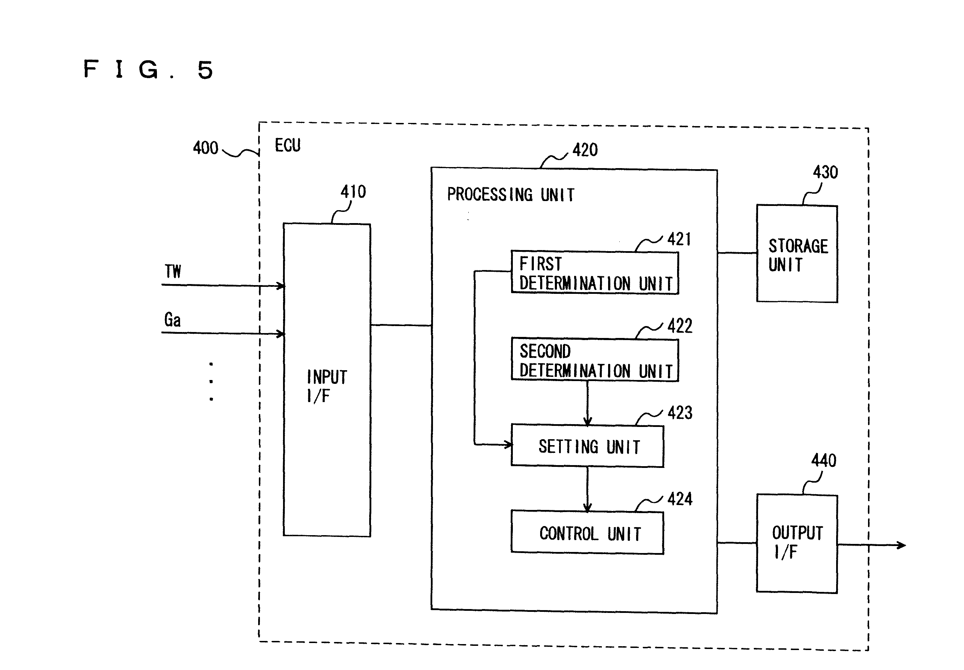

Fig. 5 shows a functional block diagram of ECU 400 when controlling engine 100 based on the engine operation line. ECU 400 includes an input interface 410, a processing unit 420, a storage unit 430, and an output interface 440.

Input interface 410 receives engine water temperature TW from engine water temperature sensor 108, intake air quantity Ga from airflow meter 116 and the detection results from other various sensors, and transmits them to processing unit 420.

A variety of pieces of information, programs, threshold values, maps and the like are stored in storage unit 430, from which the data is read by processing unit 420 and into which the data from processing unit 420 is stored, as appropriate. It is to be noted that the map of the engine operation line shown in Fig. 4 as described above is also stored in storage unit 430.

Processing unit 420 includes a first determination unit 421, a second determination unit 422, a setting unit 423, and a control unit 424.

When engine 100 is being operated, first determination unit 421 determines whether the above-described catalyst warm-up control is being performed or not.

Second determination unit 422 determines whether there is an engine load correspondence request (a request to set the output of engine 100 to correspond to the load of engine 100). This determination is made, for example, based on whether or not vehicle requiring power P has exceeded the power that can be output by driving battery 310 (whether or not a part of vehicle requiring power P is distributed to engine requiring power Pe).

Setting unit 423 sets the engine operation line based on the determination results in first determination unit 421 and second determination unit 422. When catalyst warm-up control is not being performed, setting unit 423 sets the engine operation line as a normal line (a fuel efficiency line or a power line) shown in Fig. 4 described above. When catalyst warm-up control is being performed and there is an engine load correspondence request, setting unit 423 sets the engine operation line as an emission line shown in Fig. 4 described above. In addition, when catalyst warm-up control is being performed and there is no load correspondence request of engine 100, setting unit 423 does not set the engine operation line, but sets target engine revolution speed Netgt at a constant value for catalyst warm-up control.

When setting unit 423 sets the engine operation line as the normal line or the emission line, control unit 424 controls engine 100 in accordance with the engine operation line that has been set. In other words, as described above, control unit 424 sets target engine revolution speed Netgt and target engine torque Tetgt based on the engine operation line and engine requiring power Pe. Control unit 424 then controls fuel injection and ignition in engine 100 and also controls the revolution speed of MG(1) 300A and the like, such that engine 100 is operated in accordance with the operation line shown by target engine revolution speed Netgt and target engine torque Tetgt that have been set. When setting unit 423 does not set the engine operation line but sets target engine revolution speed Netgt at a constant value for catalyst warm-up control, control unit 424 controls engine revolution speed Ne at the constant value for catalyst warm-up control.

It is to be noted that the above-described functions may be implemented by software or may be implemented by hardware.

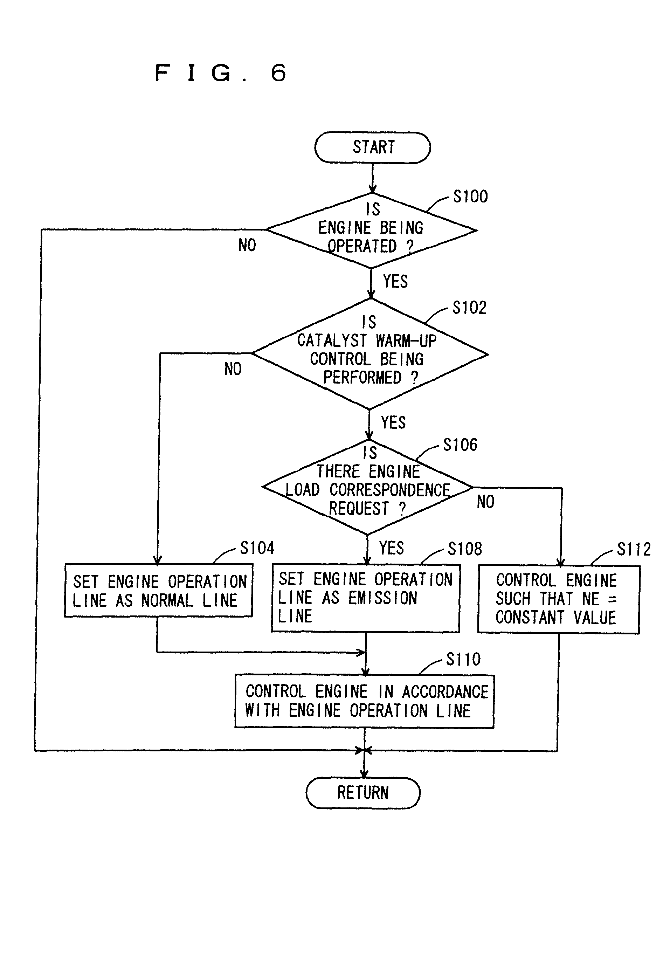

Fig. 6 shows a process flow of ECU 400 in the case where the above-described function is implemented by the software consisting predominantly of a program and the like. It is to be noted that this process is repeatedly performed in the predetermined cycle time.

As shown in Fig. 6, ECU 400 determines in S100 whether engine 100 is being operated or not. If engine 100 is being operated (YES in S100), the process proceeds to S102. If not (NO in S100), this process ends.

In S102, ECU 400 determines whether catalyst warm-up control is being performed or not. If catalyst warm-up control is being performed (YES in S102), the process proceeds to S106. If not (NO in S102), the process proceeds to S104.

In S104, ECU 400 sets the engine operation line as a normal line. In this case, based on the driver's request (accelerator pedal position and the like), ECU 400 sets the engine operation line as a fuel efficiency line or a power line as shown in Fig. 4 described above.

In S106, ECU 400 determines whether there is an engine load correspondence request. For example, when vehicle requiring power P exceeds the power that can be output by driving battery 310, ECU 400 determines that there is an engine load correspondence request. If there is a load correspondence request of engine 100 (YES in S106), the process proceeds to S108. If not (NO in S106), the process proceeds to S112.

In S108, ECU 400 sets the engine operation line as an emission line shown in Fig. 4 described above. As described above, this emission line corresponds to an engine operation line obtained by experiments and the like in consideration of the amount of retarding the ignition timing during catalyst warm-up control in order to set target engine revolution speed Netgt at an optimal value for suppressing emission discharge while setting target engine torque Tetgt at the value in accordance with engine requiring power Pe.

In S110, ECU 400 controls engine 100 in accordance with the engine operation line set in the process of S104 or S108.

In S112, ECU 400 does not set the engine operation line but controls engine revolution speed Ne to be set at a constant value for catalyst warm-up control.

The operation of ECU 400 serving as a control device according to the present embodiment based on the above-described structure and flowchart will then be described.

It is assumed that, during running of vehicle 10, engine 100 is started (YES in S100) and catalyst warm-up control is being performed (YES in S102). In such a case, when there is a load correspondence request of engine 100 (YES in S106), a need arises to set the output torque of engine 100 to correspond to vehicle requiring power P while performing catalyst warm-up control (retardation of the ignition timing). Particularly, since vehicle 10 is a plug-in hybrid vehicle, the above-described need to set the output torque is relatively high as compared with the case of the normal hybrid vehicle as described above.

It is assumed that engine 100 is controlled using the normal line during catalyst warm-up control. In this case, since the normal line does not serve as an operation line set in consideration of the catalyst warm-up control (retardation of the ignition timing), an increased amount of emissions is generated in engine 100 though the purification performance of catalyst 140 is not sufficiently achieved, which may lead to an increase in the amount of emissions to be discharged to the outside of vehicle 10.

Thus, in the present embodiment, when there is a load correspondence request of engine 100 (YES in S106), the emission line shown in Fig. 4 described above is set as an engine operation line (S108), and engine 100 is controlled using this emission line (S110).

As described above, this emission line corresponds to an operation line used for controlling engine revolution speed Ne and engine torque Te to be set at a relatively high revolution speed and at a relatively low torque, respectively, as compared with the case of the normal line while changing engine revolution speed Ne and engine torque Te in accordance with engine requiring power Pe. Consequently, it becomes possible to implement engine torque Te which corresponds to engine requiring power Pe while suppressing the emissions even during execution of catalyst warm-up control (retardation of the ignition timing).

The above-described control is particularly effective for a plug-in hybrid vehicle in which the temperature of catalyst 140 tends to be relatively low and the load of engine 100 tends to be relatively high at the startup of engine 100 as compared with the case of a normal hybrid vehicle such as vehicle 10.

Furthermore, in the present embodiment, since engine 100, MG(1) 300A and MG(2) 300B are coupled via power split device 200, the revolution speed of MG(1) 300A is controlled so that engine revolution speed Ne can be suitably controlled at the revolution speed that is set in accordance with the emission line.

As described above, when there is a need to set the engine torque to correspond to the load during catalyst warm-up control, the control device according to the present embodiment controls the engine using the emission line for controlling the engine revolution speed to be relatively high and the engine torque to be relatively low as compared with the case of the normal line while setting the engine revolution speed and the engine torque to correspond to the load required for the engine. This allows implementation of the engine torque corresponding to the load required for the engine while suppressing the emissions even when catalyst warm-up control is being performed.

In addition, in the present embodiment, when the engine is controlled based on the emission line, the load required for the engine is further increased, which prevents the driver's request from being accommodated by the emission line. In such a case, the normal line may be used to control engine 100 upon stopping catalyst warm-up control.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A control device for a vehicle including an internal combustion engine (100) as a driving force source and having a catalyst (140) purifying exhaust, warm-up control being performed on said vehicle for retarding a fuel ignition timing in said internal combustion engine (100) to promote a warm-up of said catalyst (140) when a prescribed condition is satisfied,
said control device comprising:
a first determination unit (421) determining whether said warm-up control is being performed;
a second determination unit (422) determining whether a load required for said internal combustion engine (100) is greater than a prescribed value; and
a control unit (423, 424) controlling said internal combustion engine (100),
when said warm-up control is being performed and said required load is greater than said prescribed value, said control unit (423, 424) controlling a revolution speed of said internal combustion engine (100) to be higher than a speed at a time when said warm-up control is not being performed.

2. The control device for a vehicle according to claim 1, wherein, when said warm-up control is not being performed, said control unit (423, 424) controls the revolution speed of said internal combustion engine (100) to correspond to said required load, and when said warm-up control is being performed and said required load is greater than said prescribed value, said control unit (423, 424) controls the revolution speed of said internal combustion engine (100) to correspond to said required load and to be higher than the speed at the time when said warm-up control is not being performed.

3. The control device for a vehicle according to claim 2, wherein, when said warm-up control is not being performed, said control unit (423, 424) controls the revolution speed and the output torque of said internal combustion engine (100) to correspond to said required load, and when said warm-up control is being performed and said required load is greater than said prescribed value, said control unit (423, 424) controls the revolution speed of said internal combustion engine (100) to correspond to said required load and to be higher than the speed at the time when said warm-up control is not being performed, and also controls the output torque of said internal combustion engine (100) to correspond to said required load and to be lower than a torque at the time when said warm-up control is not being performed.

4. The control device for a vehicle according to claim 3, wherein
said control device further includes a storage unit (430) storing a normal line and an emission line each as an operation line for controlling the revolution speed and the output torque of said internal combustion engine (100) to correspond to said required load, said emission line controlling the revolution speed of said internal combustion engine (100) to be relatively high and the output torque of said internal combustion engine (100) to be relatively low as compared with a case where said normal line is used to output identical power from said internal combustion engine (100), and
said control unit (423, 424) controls said internal combustion engine (100) based on said normal line when said warm-up control is not being performed, and controls said internal combustion engine (100) based on said emission line when said warm-up control is being performed and said required load is greater than said prescribed value.

5. The control device for a vehicle according to claim 2, wherein said control unit (423, 424) controls the revolution speed of said internal combustion engine (100) to be set at a constant speed irrespective of said required load when said warm-up control is being performed and said required load is less than said prescribed value.

6. The control device for a vehicle according to any of claims 1 to 5, wherein said vehicle includes a rotating electric machine as a driving force source in addition to said internal combustion engine (100), and is capable of running with electric power supplied from outside of the vehicle.

7. A control device for a vehicle including an internal combustion engine (100) as a driving force source and having a catalyst (140) purifying exhaust, warm-up control being performed on said vehicle for retarding a fuel ignition timing in said internal combustion engine (100) to promote a warm-up of said catalyst (140) when a prescribed condition is satisfied,
said control device comprising:
a first determination unit (421) determining whether said warm-up control is being performed;
a second determination unit (422) determining whether a load required for said internal combustion engine (100) is greater than a prescribed value;
a storage unit (430) storing a normal line as an operation line for controlling a revolution speed and an output torque of said internal combustion engine (100) to correspond to said required load, and an emission line for controlling the revolution speed of said internal combustion engine (100) to be relatively high and the output torque of said internal combustion engine (100) to be relatively low as compared with a case where identical power is output from said internal combustion engine (100) based on said normal line; and
a control unit (423, 424) controlling said internal combustion engine (100), wherein
said control unit (423, 424) controls the revolution speed and the output torque of said internal combustion engine (100) to correspond to said required load based on said normal line when said warm-up control is not being performed, said control unit (423, 424) controls the revolution speed and the output torque of said internal combustion engine (100) to correspond to said required load based on said emission line when said warm-up control is being performed and said required load is greater than said prescribed value, and said control unit (423, 424) controls the revolution speed of said internal combustion engine (100) to be set at a constant speed irrespective of said required load when said warm-up control is being performed and said required load is less than said prescribed value.

8. A controlling method performed by a control device for a vehicle including an internal combustion engine (100) as a driving force source and having a catalyst (140) purifying exhaust, warm-up control being performed on said vehicle for retarding a fuel ignition timing in said internal combustion engine (100) to promote a warm-up of said catalyst (140) when a prescribed condition is satisfied,
said controlling method comprising the steps of:
determining whether said warm-up control is being performed;
determining whether a load required for said internal combustion engine (100) is greater than a prescribed value; and
controlling said internal combustion engine (100),
said step of controlling said internal combustion engine (100) including the step of, when said warm-up control is being performed and said required load is greater than said prescribed value, controlling a revolution speed of said internal combustion engine (100) to be higher than a speed at a time when said warm-up control is not being performed.
